# FASCICULE DE BREVET EUROPEEN

(11) **EP 1 669 275 B1**
(45) Date de publication et mention de la délivrance du brevet: **15.10.2008**
(21) Numéro de dépôt: 05301007.0
(22) Date de dépôt: 06.12.2005
(51) Int. Cl.: B62D 5/04, B62D 7/18

(54) **Ensemble de direction**
Lenkeinrichtung
Steering assembly

(30) Priorité: 08.12.2004 FR 0413095
(43) Date de publication de la demande: 14.06.2006
(73) Titulaire: Renault SAS, 92100 Boulogne Billancourt (FR)
(72) Inventeur: Guignard, Jean-Pierre, F-92500 Rueil Malmaison (FR); Alcon, Philippe, F-78950 Gambais (FR); Meynet, Mathieu, F-78150 Le Chesnay (FR); Pugsley, Gareth, F-78330 Fontenay le Fleury (FR)

(56) Documents cités:
- WO-A-20/04016493
- DE-A1- 4 037 608
- DE-A1- 10 244 140
- US-A1- 2003 111 289
- US-B1- 6 561 307

## Description

La présente invention concerne, de façon générale, un ensemble de direction destiné à équiper un véhicule.

Plus particulièrement, l'invention concerne un ensemble de direction comportant un premier train de direction de véhicule, ce premier train comportant un porte moyeu directionnel et une structure de liaison, le porte moyeu directionnel étant adapté pour supporter le moyeu d'une roue directionnelle de véhicule et étant monté pivotant autour d'un axe directionnel par rapport à ladite structure de liaison, la structure de liaison étant adaptée pour être reliée de façon mobile par rapport à des première et seconde parties suspendues d'un véhicule.

Il est connu sur la plupart des véhicules des trains de direction généralement situés à l'avant des véhicule pour en assurer le contrôle directionnel. Un tel train est composé d'une structure de liaison reliée d'une part au châssis ou berceau du véhicule pour suspendre ce dernier et d'autre part à un porte moyeu directionnel dans lequel passe le moyeu d'une roue directionnelle.

La liaison entre la structure de liaison et le châssis qui est réalisée au niveau des première et seconde parties suspendues est telle que le train (dit premier train) puisse avoir un mouvement relatif par rapport au châssis. Ce mouvement permet au train de se déplacer par rapport au châssis pour par exemple absorber des chocs ou des variations de niveau de la chaussée lorsque le véhicule se déplace.

Un tel ensemble de commande est par exemple décrit dans le document brevet FR 2 812 264.

Dans l'exemple de ce document, le porte moyeu est monté pivotant autour d'un axe directionnel par rapport à la structure de liaison. L'orientation de la roue dans la direction choisie, se fait grâce à une crémaillère de direction reliée mécaniquement et de façon articulée avec le porte moyeu.

La crémaillère est montée coulissante par rapport au châssis et est mise en mouvement par un actionneur assemblé sur le châssis et engrainant avec la crémaillère. L'actionneur qui est fixe par rapport au châssis commande le déplacement de la crémaillère qui fait alors pivoter le porte moyeu autour de l'axe de direction orientant ainsi la roue.

Un inconvénient de ce type d'ensemble de direction est que la liaison mécanique entre le train de direction et le châssis du véhicule est complexe dans son nombre de points de liaisons et également dans la cinématique de la liaison entre le châssis et le train. En effet cette liaison entre le train et le châssis (partie suspendue du véhicule) doit permettre un mouvement du train pour l'amortissement de chocs et un mouvement du porte moyeu pour l'orientation directionnelle de la roue.

Il est connu également par le document US 2003 0111289 A1 de monter l'actionneur de direction sur la structure de liaison entre le porte moyeu et la partie suspendue du véhicule. Ce document montre les caractéristiques du préambule de la revendication 1.

Dans ce contexte, la présente invention a pour but de proposer un ensemble de direction permettant de simplifier la liaison entre le train (premier train) et la partie suspendue du véhicule c'est à dire le châssis du véhicule.

A cette fin, l'ensemble de direction de l'invention comporte les caractéristiques définies dans la revendication 1. et adapté pour faire pivoter le porte moyeu par rapport à la structure de liaison selon l'axe directionnel.

Grâce à l'invention, l'actionneur n'est pas fixé sur le châssis mais au contraire est fixé directement sur le premier train ce qui réduit le nombre de liaisons mécaniques entre le premier train et le reste du châssis. De plus, le train n'a plus que deux points de liaisons mécaniques avec le châssis, ces points étant localisés au niveau des première et seconde parties suspendues.

La géométrie du châssis du véhicule peut donc être simplifiée car il n'y a plus besoin de prévoir de zones de passage de la crémaillère dans le châssis ni de zone pour le passage de biellette de direction entre le châssis et le train.

Un tel train est plus simplement démonté du fait de cette réduction du nombre de liens mécaniques entre le châssis et le train. De plus un tel type de train a l'avantage de pouvoir s'adapter sur un grand nombre de types de véhicules en prévoyant simplement des partie suspendues standards sur ces véhicules.

Le porte moyeu directionnel étant monté pivotant par rapport à la pièce de liaison selon ledit axe directionnel, cet axe directionnel étant sensiblement perpendiculaire à l'axe de carrossage et étant sensiblement vertical et l'actionneur comportant un support d'actionneur et un bras d'actionneur mobile par rapport au support d'actionneur entre des première et seconde positions d'actionnement, l'actionneur étant assemblé sur le premier train de telle manière que lorsque le bras d'actionneur est dans sa première position d'actionnement, le porte moyeu directionnel est alors dans une première position directionnelle et lorsque le bras d'actionneur est dans sa seconde position d'actionnement, le porte moyeu directionnel est alors dans une seconde position directionnelle différente de la première position directionnelle.

Ce mode particulier de réalisation de l'invention permet son adaptation sur des trains directionnels de type connus tels que des trains dits « Mac Pherson à pivot indépendant».

On peut également faire en sorte que le support d'actionneur soit assemblé fixement sur la pièce de liaison et qu'une première extrémité du bras d'actionneur soit reliée au porte moyeu.

D'autres caractéristiques et avantages de l'invention ressortiront clairement de la description qui en est faite ci-après, à titre indicatif et nullement limitatif, en référence aux dessins annexés, dans lesquels:
la figure 1a représente une vue éclatée en perspective d'un train directionnel de véhicule servant pour la mise en oeuvre de l'ensemble de direction selon l'invention ;
la figure 1b représente une vue identique à la figure 1a mais comportant en plus un moyen de blocage en rotation selon un axe sensiblement vertical de la pièce de liaison par rapport au bras de train (biellette de blocage) ;
la figure 2 représente une vue schématique de l'ensemble de direction selon l'invention doté de deux trains directionnels.

Comme annoncé précédemment, l'invention concerne un ensemble de direction comportant un premier train de direction 15 de véhicule selon l'invention.

Ce premier train comporte un porte moyeu directionnel 5 et une structure de liaison 32, le porte moyeu directionnel supporte le moyeu 14 d'une roue directionnelle de véhicule et est monté pivotant autour d'un axe directionnel 7 par rapport à ladite structure de liaison 32.

La structure de liaison 32 est reliée de façon mobile par rapport à des première et seconde parties suspendues d'un véhicule 13a et 13b.

Un actionneur 1 est monté sur le premier train et permet de faire pivoter le porte moyeu 5 par rapport à la structure de liaison 32 selon l'axe directionnel 7.

Ce train directionnel est un train avant de véhicule qui a notamment la particularité d'avoir un actionneur embarqué sur le train pour permettre la rotation du porte moyeu 5 par rapport à la structure de liaison 32.

La structure de liaison 32 est composée d'un bras de train 9 ayant la forme d'un triangle et adapté pour être monté pivotant à l'une de ses extrémités sur la première partie suspendue de véhicule 13a et autour d'un axe dit de carrossage du train 8. La connexion entre le bras de train 9 et la première partie suspendue est faite par une base du train en forme de triangle qui possède deux rotules distantes reliées au châssis, formant ainsi un axe de carrossage. L'axe de carrossage du train est généralement parallèle à l'axe longitudinal du véhicule sur lequel le train est monté.
- La structure de liaison comporte en outre :
   une pièce de liaison 6 reliée par une articulation 11 à une seconde extrémité du bras de train 9 ;
- et un amortisseur 10 ayant une première extrémité assemblée avec la pièce de liaison 6 et une seconde extrémité assemblée sur une seconde partie suspendue de véhicule 13b distante de la première partie suspendue 13a.

La structure de liaison est reliée au châssis du véhicule par les première et seconde parties suspendues du châssis. De cette manière la structure de liaison qui est une structure déformable élastiquement (grâce à l'amortisseur et au ressort) oscille entre plusieurs positions verticales par rapport au véhicule pour permettre un effet de suspension du véhicule.

Le porte moyeu directionnel 5 qui est monté pivotant par rapport à la pièce de liaison 6 selon ledit axe directionnel 7 sensiblement vertical et sensiblement perpendiculaire à l'axe de carrossage 8 permet quand à lui de transmettre les efforts de la roue 31 vers le châssis via la structure de liaison qui est un intermédiaire entre le véhicule et le moyeu de la roue. Le fait que le porte moyeu 5 soit articulé par rapport à la structure de liaison permet en outre de déplacer la roue par rapport à l'axe principal du véhicule pour en permettre l'orientation.

L'actionneur qui est monté entre la structure de liaison et le porte moyeu permet d'orienter le porte moyeu sans requérir une liaison mécanique spécifique à cette orientation entre le châssis et le porte moyeu.

Pour cela, le support d'actionneur 20 est placé sur l'ensemble de liaison et est relié au porte moyeu 5 par un bras d'actionneur 3 mobile par rapport au support d'actionneur 20 entre des première et seconde positions d'actionnement 16, 17.

L'actionneur est assemblé sur le premier train 15 grâce à un support d'actionneur 20 de telle manière que lorsque le bras d'actionneur 3 est dans sa première position d'actionnement 16, le porte moyeu directionnel 5 est alors dans une première position directionnelle 18 et lorsque le bras d'actionneur 3 est dans sa seconde position d'actionnement 17, le porte moyeu directionnel 5 est alors dans une seconde position directionnelle 19 différente de la première position directionnelle 18.

Le porte moyeu directionnel passe ainsi d'une position directionnelle à une autre en pivotant autour de l'axe directionnel 7 par rapport à la pièce de liaison 6 permettant ainsi d'orienter la roue directionnelle du véhicule.

Une première extrémité 21 du bras d'actionneur 3 est reliée au porte moyeu 5.

Cette liaison entre la première extrémité 21 et le porte moyeu est réalisée grâce à une biellette de direction 4. La biellette de direction 4 est articulée à la fois par rapport à la première extrémité 21 du bras d'actionneur 3 (à une extrémité de la biellette) et aussi par rapport à un point d'attache 22 du porte moyeu 5 (à une autre extrémité de la biellette). Ce point d'attache 22 est excentré par rapport à l'axe directionnel 7 autour duquel tourne le porte moyeu 5. L'articulation entre la biellette de direction 4 et le point d'attache 22 est une articulation en chape autour d'un pivot. La chape est formée dans une portion du porte moyeu 5 dans laquelle est insérée une extrémité de la biellette 4.

L'autre extrémité de la biellette qui est reliée au bras d'actionneur est également articulée autour d'un pivot excentré par rapport à l'axe de sortie d'actionneur.

La longueur de la biellette peut être ajustable par exemple en faisant en sorte que les extrémités de la biellette soient respectivement formées dans des tiges filetées distinctes, ces tiges étant reliées entre elles par un tube intérieurement fileté dans lequel sont vissées les tiges. Les filetages du tube et des tiges sont préférentiellement agencés de façon qu'en tournant le tube autour de son axe de symétrie, dans un premier sens, les tiges se rapprochent l'une de l'autre et qu'en tournant ce tube dans un autre sens, les tiges s'écartent l'une de l'autre. Le réglage de la longueur de biellette permet de faire varier la position du porte moyeu pour permettre par exemple un réglage de parallélisme entre deux roues directionnelles du véhicule. Ce régalage de parallélisme peut également être réalisé par l'électronique du système.

L'actionneur comporte un support d'actionneur 20 formé par une surface extérieure cylindrique de l'actionneur venant s'insérer dans une ouverture de forme complémentaire créée dans la pièce de liaison 6.

Un arrêt en rotation du support d'actionneur par rapport à la pièce de liaison 6 est réalisé par collage du support dans l'ouverture de forme complémentaire ou par vissage d'une butée d'arrêt en rotation ou par serrage de l'ouverture autour du support d'actionneur.

L'actionneur comporte également un moteur électrique 2b et un réducteur 2a doté d'un axe de sortie d'actionneur 24, le moteur entraînant à rotation à l'aide d'un axe de moteur 24 et d'un moyen de réduction, ledit axe de sortie d'actionneur 23 sur lequel est assemblé fixement ledit bras d'actionneur 3.

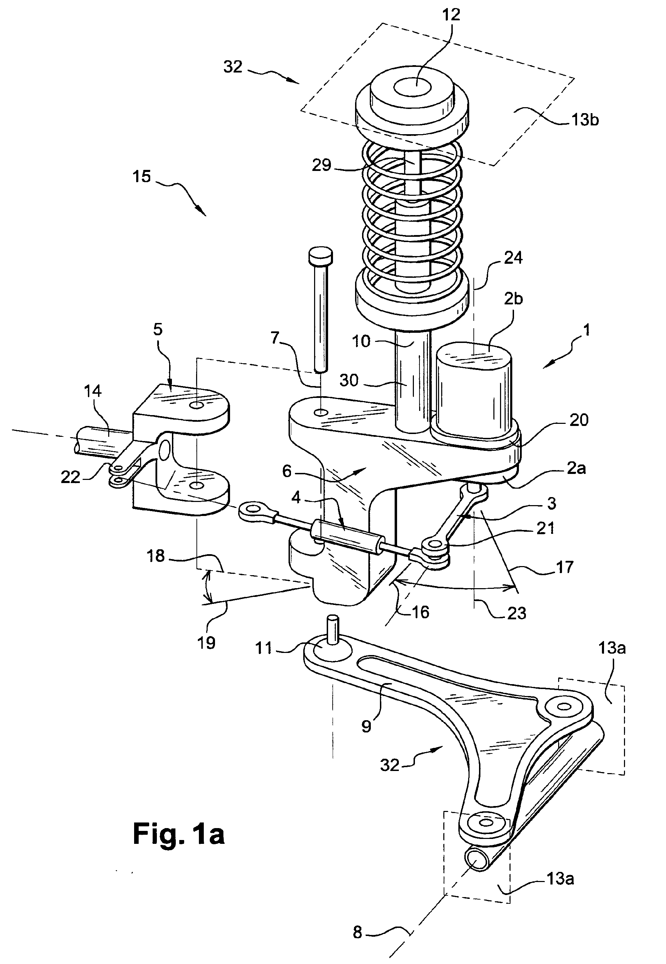

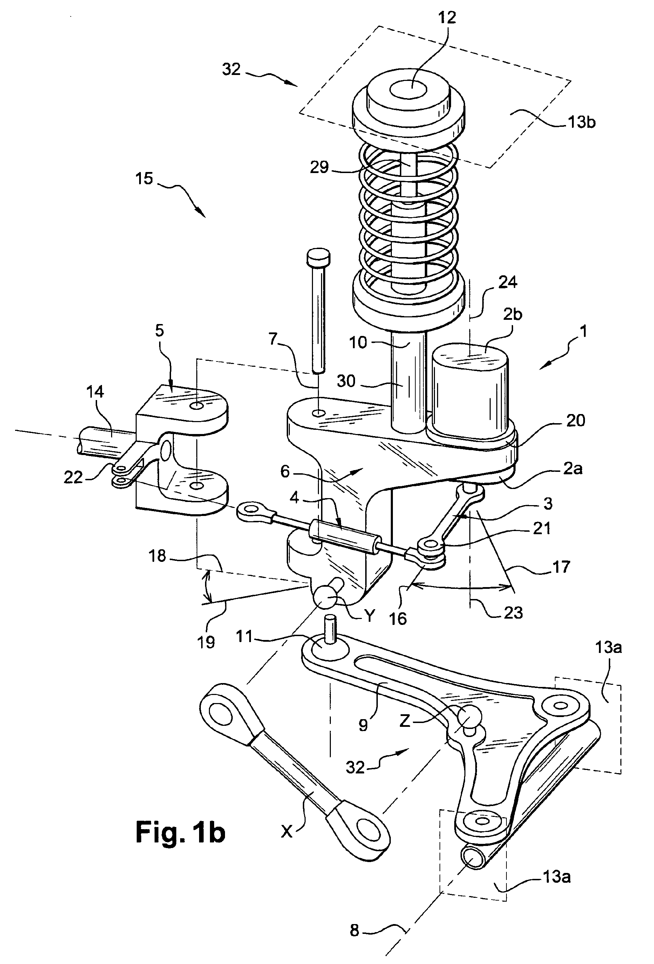

L'axe moteur 24 peut être parallèle à l'axe de sortie d'actionneur 23, comme c'est le cas sur la figure 1, ou alternativement perpendiculaire par rapport à cet axe de sortie actionneur 23.

Le moyen de réduction comprend un engrenage engrainant sur une vis sans fin.

Ainsi, lorsque l'axe moteur 24 est parallèle à l'axe de sortie d'actionneur 23, le moteur possède un premier engrenage engrenant sur une couronne formée sur un axe de transmission perpendiculaire à l'axe moteur. L'axe de transmission comporte une vis sans fin entraînant à rotation un engrenage porté par l'axe de sortie d'actionneur 23 au bout duquel se trouve le bras d'actionneur 3. L'engrenage porté par l'axe de sortie d'actionneur 3 est fixe en rotation par rapport à ce dernier.

Alternativement, lorsque l'axe moteur 24 est perpendiculaire à l'axe de sortie d'actionneur 23, le moteur possède un axe moteur comportant une vis sans fin engrenant directement sur une couronne dentée portée par l'axe de sortie actionneur et fixe en rotation par rapport à ce dernier.

Le montage des axes moteur et actionneur parallèle ou perpendiculaire est choisi selon la géométrie du véhicule à équiper, le train étant adaptable au véhicule.

L'avantage d'intercaler une vis sans fin dans la chaîne cinématique entre le moteur et le bras d'actionneur 3 est que la vis permet l'entraînement par le moteur du bras d'actionneur sans perte de rendement moteur important. Selon la valeur de pas de vis choisie on peut soit faire en sorte que la vis puisse être entraînée par le bras d'actionneur afin d'entraîner le moteur (si l'on souhaite que la position du bras puisse varier d'elle même sans mise en route du moteur) soit faire en sorte que la vis permette l'entraînement par le moteur du bras d'actionneur et non le contraire. Dans cette dernière alternative, le bras d'actionneur reste immobile en rotation tant que le moteur n'est pas volontairement actionné. Ceci évite le risque de rotation involontaire du porte moyeu autour de l'axe directionnel 7. Un autre avantage de la vis sans fin est d'avoir un rapport de réduction important, la sortie de l'actionneur a donc un mouvement de rotation de vitesse angulaire faible par rapport à la vitesse du moteur et un fort couple de sortie d'actionneur. Ainsi, le moteur électrique peut être de taille réduite.

L'amortisseur 10 qui relie la pièce de liaison 6 à la seconde partie suspendue du véhicule 13b comporte un piston 29 coulissant dans une chambre 30, ledit piston 29 étant relié à la seconde partie du véhicule 13b par une liaison rotule dite rotule d'amortisseur 12.

Ainsi, la pièce de liaison 6 sur laquelle est fixée une extrémité de l'amortisseur est rotulante par rapport à la seconde partie suspendue 13b et peut également se déplacer par rapport à cette seconde partie suivant l'axe de coulissement du piston d'amortisseur. Un ressort assure le retour du piston dans une position sortie, de façon à écarter élastiquement la pièce de liaison 6 de la partie suspendue du véhicule.

La liaison entre la seconde extrémité du bras de train 9 et la pièce de liaison 6 est également réalisée par une liaison rotule dite rotule de direction 11 et préférentiellement par une liaison pivot d'axe parallèle à l'axe de carrossage du train 8 (pour éviter un risque de pivotement de la pièce 6 par rapport au bras 9 selon un axe vertical cette liaison pivot peut être réalisée par une liaison en chape entre le bras 9 et la pièce 6, à la place de la liaison rotule 11).

Alternativement et comme représenté sur la figure 1b, la pièce de liaison 6 est bloquée en rotation (selon un axe sensiblement vertical et par rapport au bras 9) par une biellette articulée X. Cette biellette X est articulée d'une part par une rotule Y située dans la partie basse de la pièce 6 et d'autre part par une rotule Z articulée sur le bras de suspension 9.

Dans les deux modes des figures 1a et 1b, le bras de train est relié au châssis par une liaison pivot non glissant autour d'un axe de carrossage 8 réalisée sur une première partie suspendues de véhicule 13a.

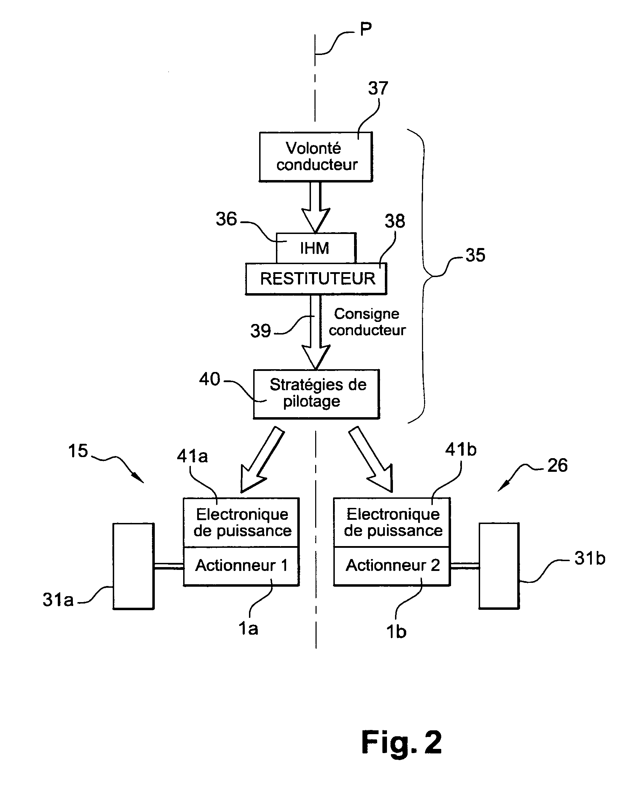

Comme cela est représenté schématiquement sur la figure 2, chaque actionneur est alimenté en énergie par son propre moyen d'alimentation en énergie indépendant ou alternativement par un moyen d'alimentation principal commun. Une alimentation secours peut également être prévue, soit sous la forme d'une alimentation secours indépendante pour chaque actionneur, soit sous la forme d'une alimentation secours commune aux deux actionneurs. L'ensemble de direction de l'invention comprend un second train 26 structurellement identique au premier train 15, ces premier et second trains étant symétriques entre eux par rapport à un plan de symétrie P. Ce plan de symétrie P est un plan vertical traversant le véhicule dans sa longueur au milieu de sa largeur.

L'ensemble selon l'invention tel que schématisé sur la figure 2 comporte une chaîne de transmission d'information 35 partant du conducteur 37 pour déplacer les roues du véhicule 31a et 31b. L'information 35 est collectée par une interface homme machine 36 (volant de direction et capteur de position du volant). L'interface homme machine 36 qui est reliée à un restituteur 38 transmet la consigne conducteur 39 à un système de gestion de stratégie de pilotage 40. Ce système de gestion 40 commande l'alimentation des actionneurs 1a et 1b par l'intermédiaire de circuits de puissance 41a et 41b dédiés à chaque actionneur.

Chaque circuit de puissance alimente donc sélectivement l'actionneur qui se trouve sur un des trains directionnels du véhicule pour ainsi commander le mouvement de la roue directionnelle 31a et/ou 31b.

## Revendications

1. Ensemble de direction comportant un premier train de direction (15) de véhicule, ce premier train comportant un porte moyeu directionnel (5) et une structure de liaison (32), le porte moyeu directionnel étant adapté pour supporter le moyeu d'une roue directionnelle de véhicule et étant monté pivotant autour d'un axe directionnel (7) par rapport à ladite structure de liaison (32), la structure de liaison étant adaptée pour être reliée de façon mobile par rapport à des première et seconde parties suspendues (13a, 13b) d'un véhicule, ce premier train (15) comportant un actionneur (1) monté sur ce premier train et adapté pour faire pivoter le porte moyeu (5) par rapport à la structure de liaison (32) selon l'axe directionnel (7), cette structure de liaison comportant un seul bras de train (9) adapté pour être monté pivotant à l'une de ses extrémités sur ladite première partie suspendue de véhicule (13a) et autour d'un axe dit de carrossage du train (8) et un amortisseur (10) ayant une extrémité adaptée pour être assemblée sur une seconde partie suspendue de véhicule (13b) distante de la première partie suspendue (13a), **caractérisé en ce que** la structure de liaison comporte une pièce de liaison (6) reliée par une articulation (11) à une seconde extrémité du bras de train (9), l'amortisseur (10) ayant son autre extrémité assemblée avec la pièce de liaison (6), et **en ce que** le porte moyeu directionnel (5) est monté pivotant par rapport à la pièce de liaison (.6) selon ledit axe directionnel (7).

2. Ensemble de direction selon la revendication 1, **caractérisé en ce que** ledit axe directionnel (7) est sensiblement perpendiculaire à l'axe de carrossage (8) et **en ce que** l'actionneur comporte un support d'actionneur (20) et un bras d'actionneur (3) mobile par rapport au support d'actionneur (20) entre des première et seconde positions d'actionnement (16, 17), l'actionneur étant assemblé sur le premier train (15) de telle manière que lorsque le bras d'actionneur (3) est dans sa première position d'actionnement (16), le porte moyeu directionnel (5) est alors dans une première position directionnelle (18) et lorsque le bras d'actionneur (3) est dans sa seconde position d'actionnement (17), le porte moyeu directionnel (5) est alors dans une seconde position directionnelle (19) différente de la première position directionnelle (18).

3. Ensemble selon la revendication 2, **caractérisé en ce que** le support d'actionneur (20) est assemblé fixement sur la pièce de liaison (6) et **en ce qu'**une première extrémité (21) du bras d'actionneur (3) est reliée au porte moyeu (5).

4. Ensemble selon la revendication 3, **caractérisé en ce que** la liaison entre la première extrémité (21) du bras d'actionneur (3) et le porte moyeu directionnel (5) est réalisée par une biellette de direction (4) articulée à la fois par rapport à la première extrémité (21) du bras d'actionneur (3) et par rapport à un point d'attache (22) du porte moyeu (5).

5. Ensemble selon la revendication 4, **caractérisé en ce que** la biellette de direction (4) possède une longueur ajustable.

6. Ensemble selon l'une quelconque des revendications 2 à 4, **caractérisé en ce que** l'actionneur (1) comporte un moteur électrique (2b) et un réducteur (2a) doté d'un axe de sortie d'actionneur (23), le moteur entraînant à rotation à l'aide d'un axe de moteur (24) et d'un moyen de réduction, ledit axe de sortie d'actionneur (23) sur lequel est assemblé fixement ledit bras d'actionneur (3).

7. Ensemble selon la revendication 6, **caractérisé en ce que** l'axe moteur (24) est parallèle à l'axe de sortie d'actionneur (23).

8. Ensemble selon la revendication 6, **caractérisé en ce que** l'axe moteur (24) est perpendiculaire à l'axe de sortie d'actionneur (23).

9. Ensemble selon l'une quelconque des revendications 6 à 8, **caractérisé en ce que** le moyen de réduction comprend un engrenage engrainant sur une vis sans fin.

10. Ensemble selon l'une quelconque des revendications 1 à 9, **caractérisé en ce qu'**il comprend un second train (26) structurellement identique au premier train (15), ces premier et second trains étant symétriques entre eux par rapport à un plan de symétrie (P).

## Claims

1. Steering assembly comprising a first vehicle steered axle assembly (15), this first axle assembly comprising a steering hub carrier (5) and a connecting structure (32), the steering hub carrier being designed to support the hub of a vehicle steered wheel and being mounted to pivot about a steering axis (7) with respect to the said connecting structure (32), the connecting structure being designed to be connected such that it can move relative to first and second suspended parts (13a, 13b) of a vehicle, this first axle assembly (15) comprising an actuator (1) mounted on this first axle assembly and designed to cause the hub carrier (5) to pivot relative to the connecting structure (32) about the steering axis (7), this connecting structure comprising a single axle assembly link (9) designed to be mounted such that it can pivot at one of its ends on the said first suspended vehicle part (13a) and about an axis known as the camber axis of the axle assembly (8) and a shock absorber (10) having one end designed to be assembled with a second vehicle suspended part (13b) distant from the first suspended part (13a), **characterized in that** the connecting structure comprises a connecting piece (6) connected by an articulation (11) to a second end of the axle assembly link (9), the shock absorber (10) having its other end assembled with the connecting piece (6), and **in that** the steering hub carrier (5) is mounted such that it can pivot relative to the connecting piece (6) about the said steering axis (7).

2. Steering assembly according to Claim 1, **characterized in that** the said steering axis (7) is substantially perpendicular to the camber axis (8) and **in that** the actuator comprises an actuator support (20) and an actuator link (3) able to move relative to the actuator support (20) between first and second actuating positions (16, 17), the actuator being assembled with the first axle assembly (15) in such a way that when the actuator link (3) is in its first actuating position (16), the steering hub carrier (5) is then in a first steering position (18), and when the actuator link (3) is in its second actuating position (17), the steering hub carrier (5) is then in a second steering position (19) different from the first steering position (18).

3. Assembly according to Claim 2, **characterized in that** the actuator support (20) is assembled fixedly on the connecting piece (6) and **in that** a first end (21) of the actuator link (3) is connected to the hub carrier (5).

4. Assembly according to Claim 3, **characterized in that** the connection between the first end (21) of the actuator arm (3) and the steering hub carrier (5) is achieved by way of a tie rod (4) articulated both relative to the first end (21) of the actuator link (3) and relative to a mounting point (22) of the hub carrier (5).

5. Assembly according to Claim 4, **characterized in that** the tie rod (4) is of adjustable length.

6. Assembly according to any one of Claims 2 to 4, **characterized in that** the actuator (1) comprises an electric motor (2b) and a reduction unit (2a) provided with an actuator output axis (23), the motor, via a motor axis (24) and a reduction means, driving the rotation of the said actuator output axis (23) on which the said actuator link (3) is fixedly assembled.

7. Assembly according to Claim 6, **characterized in that** the motor axis (24) is parallel to the actuator output axis (23).

8. Assembly according to Claim 6, **characterized in that** the motor axis (24) is perpendicular to the actuator output axis (23).

9. Assembly according to any one of Claims 6 to 8, **characterized in that** the reduction means comprises a gearwheel meshing with a worm.

10. Assembly according to any one of Claims 1 to 9, **characterized in that** it comprises a second axle assembly (26) structurally identical to the first axle assembly (15), these first and second axle assemblies being mutually symmetric with respect to a plane of symmetry (P).

## Patentansprüche

1. Lenkeinrichtung, die einen ersten Fahrzeug-Lenkstrang (15) aufweist, wobei dieser erste Strang einen Lenknabenträger (5) und eine Verbindungsstruktur (32) aufweist, wobei der Lenknabenträger geeignet ist, um die Nabe eines gelenkten Fahrzeugrads zu tragen, und um eine Lenkachse (7) bezüglich der Verbindungsstruktur (32) schwenkbar montiert ist, wobei die Verbindungsstruktur geeignet ist, um bezüglich eines ersten und eines zweiten gefederten Teils (13a, 13b) des Fahrzeugs beweglich verbunden zu werden, wobei dieser erste Strang (15) ein Stellglied (1) aufweist, das auf diesen ersten Strang montiert und geeignet ist, um den Nabenträger (5) bezüglich der Verbindungsstruktur (32) gemäß der Lenkachse (7) schwenken zu lassen, wobei diese Verbindungsstruktur einen einzigen Strangarm (9), der geeignet ist, um an einem seiner Enden auf den ersten gefederten Fahrzeugteil (13a) und um eine so genannte Radsturzachse (8) des Strangs schwenkbar montiert zu werden, und einen Dämpfer (10) aufweist, von dem ein Ende geeignet ist, um auf einem zweiten gefederten Fahrzeugteil (13b) eingebaut zu werden, der vom ersten gefederten Teil (13a) entfernt ist, **dadurch gekennzeichnet, dass** die Verbindungsstruktur ein Verbindungsbauteil (6) aufweist, das über ein Gelenk (11) mit einem zweiten Ende des Strangarms (9) verbunden ist, wobei das andere Ende des Dämpfers (10) mit dem Verbindungsbauteil (6) zusammengebaut ist, und dass der Lenknabenträger (5) bezüglich des Verbindungsbauteils (6) gemäß der Lenkachse (7) schwenkbar montiert ist.

2. Lenkeinrichtung nach Anspruch 1, **dadurch gekennzeichnet, dass** die Lenkachse (7) im Wesentlichen lotrecht zur Radsturzachse (8) ist, und dass das Stellglied einen Stellgliedträger (20) und einen Stellgliedarm (3) aufweist, der bezüglich des Stellgliedträgers (20) zwischen einer ersten und einer zweiten Betätigungsstellung (16, 17) beweglich ist, wobei das Stellglied auf dem ersten Strang (15) so eingebaut ist, dass, wenn der Stellgliedarm (3) in seiner ersten Betätigungsstellung (16) ist, der Lenknabenträger (5) dann in einer ersten Lenkstellung (18) ist, und wenn der Stellgliedarm (3) in seiner zweiten Betätigungsstellung (17) ist, der Lenknabenträger (5) dann in einer zweiten Lenkstellung (19) ist, die sich von der ersten Lenkstellung (18) unterscheidet.

3. Einrichtung nach Anspruch 2, **dadurch gekennzeichnet, dass** der Stellgliedträger (20) ortsfest auf dem Verbindungsbauteil (6) eingebaut wird, und dass ein erstes Ende (21) des Stellgliedarms (3) mit dem Nabenträger (5) verbunden ist.

4. Einrichtung nach Anspruch 3, **dadurch gekennzeichnet, dass** die Verbindung zwischen dem ersten Ende (21) des Stellgliedarms (3) und dem Lenknabenträger (5) von einer Lenkspurstange (4) hergestellt wird, die sowohl bezüglich des ersten Endes (21) des Stellgliedarms (3) als auch bezüglich eines Befestigungspunkts (22) des Nabenträgers (5) angelenkt ist.

5. Einrichtung nach Anspruch 4, **dadurch gekennzeichnet, dass** die Lenkspurstange (4) eine einstellbare Länge besitzt.

6. Einrichtung nach einem der Ansprüche 2 bis 4, **dadurch gekennzeichnet, dass** das Stellglied (1) einen Elektromotor (2b) und ein Getriebe (2a) aufweist, das mit einer Stellglied-Ausgangsachse (23) versehen ist, wobei der Motor die Stellglied-Ausgangsachse (23), auf der der Stellgliedarm (3) ortsfest eingebaut ist, mit Hilfe einer Motorachse (24) und eines Untersetzungsmittels in Drehung versetzt.

7. Einrichtung nach Anspruch 6, **dadurch gekennzeichnet, dass** die Motorachse (24) parallel zur Stellglied-Ausgangsachse (23) ist.

8. Einrichtung nach Anspruch 6, **dadurch gekennzeichnet, dass** die Motorachse (24) lotrecht zur Stellglied-Ausgangsachse (23) ist.

9. Einrichtung nach einem der Ansprüche 6 bis 8, **dadurch gekennzeichnet, dass** das Untersetzungsmittel ein Zahnrad aufweist, das in eine Endlosschraube eingreift.

10. Einrichtung nach einem der Ansprüche 1 bis 9, **dadurch gekennzeichnet, dass** sie einen zweiten Strang (26) aufweist, der strukturell gleich dem ersten Strang (15) ist, wobei dieser erste und dieser zweite Strang bezüglich einer Symmetrieebene (P) zueinander symmetrisch sind.
